# EUROPEAN PATENT APPLICATION

(11) **EP 3 705 876 A1**
(43) Date of publication of application: **09.09.2020**
(21) Application number: 19216199.0
(22) Date of filing: 24.11.2010
(51) Int. Cl.: G01N 21/64, G01N 21/77, G01N 31/22

(54) **PHOTOLUMINESCENT OXYGEN PROBE WITH REDUCED CROSS-SENSITIVITY TO HUMIDITY**

(30) Priority: 07.12.2009 US 63231809
(62) Divisional of application: 10192344.9
(71) Applicant: Mocon, Inc., Minneapolis, Minnesota 55428 (US); Luxcel Biosciences Limited, Cork (IE)
(72) Inventor: Papkovski, Dmitri, Blarney, Cork (IE); Mayer, Daniel, Wyoming, Minnesota (US)
(74) Representative: Purdylucey Intellectual Property

(57) **Abstract**

An oxygen-sensitive probe having reduced cross-sensitivity to humidity and methods of manufacturing and using such probes to measure oxygen concentrations within an enclosed space are disclosed. The probe (10) includes a thin film (20) of an oxygen-sensitive photoluminescent dye (21) on a first major surface (30a) of a microporous wettable polyolefin support layer (30). The dye is preferably a solid state composition comprising the oxygen-sensitive photoluminescent dye (21) embedded within an oxygen-permeable hydrophobic polymer matrix (22).

## Description

### BACKGROUND

Solid-state polymeric materials based on oxygen-sensitive photoluminescent dyes are widely used as optical oxygen sensors and probes. See, for example United States Published Patent Applications 2009/0029402, 2008/8242870, 2008/215254, 2008/199360, 2008/190172, 2008/148817, 2008/146460, 2008/117418, 2008/0051646, 2006/0002822, 7,569,395, 7,534,615, 7,368,153, 7,138,270, 6,689,438, 5,718,842, 4,810,655, and 4,476,870. Such optical sensors are available from a number of suppliers, including Presens Precision Sensing, GmbH of Regensburg, Germany, Oxysense of Dallas, Texas, United States, and Luxcel Biosciences, Ltd of Cork, Ireland.

To increase photoluminescent signals obtainable from the sensor and thus increase the reliability of optical measurements, oxygen-sensitive materials often incorporate a light-scattering additive (*e.g*., TiO2 - Klimant I., Wolfbeis O.S. - Anal Chem, 1995, v.67, p.3160-3166) or underlayer (*e.g*., microporous support - see Papkovsky, DB et al.- Sensors Actuators B, 1998, v.51, p.137-145). Unfortunately, such probes tend to show significant cross-sensitivity to humidity, preventing them from gaining wide acceptance for use in situations where humidity of the samples under investigation cannot be controlled.

Hence, a need exists for an optical photoluminescent oxygen probe with reduced cross-sensitivity to humidity.

### SUMMARY OF THE INVENTION

A first aspect of the invention is an oxygen-sensitive probe comprising an oxygen-sensitive photoluminescent dye applied onto a first major surface of a microporous wettable polyolefin support layer so as to form a thin film of the photoluminescent dye on the support layer. The oxygen-sensitive photoluminescent dye is preferably applied as a solid state composition comprising the oxygen-sensitive photoluminescent dye embedded within an oxygen-permeable polymer matrix.

A second aspect of the invention is a method for measuring oxygen concentration within an enclosed space employing an oxygen-sensitive probe according to the first aspect of the invention. The method includes the steps of (A) obtaining an oxygen-sensitive probe according to the first aspect of the invention, (B) placing the probe within the enclosed space, and (C) ascertaining oxygen concentration within the enclosed space by (i) repeatedly exposing the probe to excitation radiation over time, (ii) measuring radiation emitted by the excited probe after at least some of the exposures, (iii) measuring passage of time during the repeated excitation exposures and emission measurements, and (iv) converting at least some of the measured emissions to an oxygen concentration based upon a known conversion algorithm.

A third aspect of the invention is a method for monitoring changes in oxygen concentration within an enclosed space employing an oxygen-sensitive probe according to the first aspect of the invention. The method includes the steps of (A) obtaining an oxygen-sensitive probe according to the first aspect of the invention, (B) placing the probe within the enclosed space, (C) ascertaining oxygen concentration within the enclosed space over time by (i) repeatedly exposing the probe to excitation radiation over time, (ii) measuring radiation emitted by the excited probe after at least some of the exposures, (iii) measuring passage of time during the repeated excitation exposures and emission measurements, and (iv) converting at least some of the measured emissions to an oxygen concentration based upon a known conversion algorithm, and (D) reporting at least one of (i) at least two ascertained oxygen concentrations and the time interval between those reported concentrations, and (ii) a rate of change in oxygen concentration within the enclosed space calculated from data obtained in step (C).

A fourth aspect of the invention is a method of preparing a photoluminescent oxygen-sensitive probe according to the first aspect of the invention. The method includes the steps of (A) preparing a coating cocktail which contains the photoluminescent oxygen-sensitive dye and the oxygen-permeable polymer in an organic solvent, (B) applying the cocktail to the first major surface of the support material, and (C) allowing the cocktail to dry, whereby a solid-state thin film coating is formed on the support, thereby forming the photoluminescent oxygen-sensitive probe.

The following are numbered statements of invention:
1. The invention provides an oxygen-sensitive probe (10) comprising an oxygen-sensitive photoluminescent dye (21) applied onto a first major surface (30a) of a microporous wettable polyolefin support layer (30) forming a thin film coating on the support layer.
2. The oxygen-sensitive probe of statement 1, further comprising a layer of a pressure-sensitive adhesive (40) applied onto the first major surface (30a) of the support layer (30).
3. The oxygen-sensitive probe of statement 1 or 2, wherein the oxygen-sensitive photoluminescent dye (21) is applied as a solid state composition comprising the oxygen-sensitive photoluminescent dye embedded within an oxygen-permeable hydrophobic polymer matrix (22).
4. The oxygen-sensitive probe of any of the preceding statements, wherein the oxygen-sensitive photoluminescent dye (21) is a transition metal complex.
5. The oxygen-sensitive probe of statement 4, wherein the transition metal complex is selected from the group consisting of a ruthenium bipyridyl, a ruthenium diphenylphenanothroline, a platinum porphyrin, a palladium porphyrin, a phosphorescent metallocomplex of a porphyrinketone, an azaporphyrin, a tetrabenzoporphyrin, a chlorin, and a long-decay luminescent complex of iridium(III) or osmium(II).
6. The oxygen-sensitive probe of statement 3, wherein the oxygen-permeable polymer matrix (22) is selected from the group consisting of polystryrene, polycarbonate, polysulfone, and polyvinyl chloride.
7. The oxygen-sensitive probe of any of the preceding statements, wherein the wettable polyolefin support layer (30) is highly wettable, and/or wherein the wettable polyolefin support layer (30) is completely wettable, and/or wherein the wettable polyolefin support layer (30) is a non-woven spinlaid fibrous polyolefin fabric, and/or wherein the wettable polyolefin support layer (30) is a non-woven spunbond polyolefin fabric, and/or wherein the wettable polyolefin support layer (30) is a wettable non-woven spunbond polypropylene fabric, and/or wherein the wettable polyolefin support layer (30) is a non-woven spinlaid polypropylene fabric with hydrophilic pendant groups in which the pendant groups are optionally acrylic acid groups, and/or wherein the wettable polyolefin is a wettable polyethylene or polypropylene.
8. The oxygen-sensitive probe of any of the preceding statements, wherein the support layer (30) is between 30 µm and 500 µm thick, and/or wherein the solid state composition (20) is applied only to the first major surface (30a) of the support layer.
9. The oxygen-sensitive probe of any of the preceding statements wherein the probe has a change of luminescence lifetime of less than 5% with a change in relative humidity of an analyte gas from 1% to 90%.
10. A method for measuring oxygen concentration within an enclosed space, comprising the steps of:
   a. obtaining an oxygen-sensitive probe according to any one of the preceding statements,
   b. placing the probe within the enclosed space, and
   c. ascertaining oxygen concentration within the enclosed space by:
      i. repeatedly exposing the probe to excitation radiation over time,
      ii. measuring radiation emitted by the excited probe after at least some of the exposures,
      iii. measuring passage of time during the repeated excitation exposures and emission measurements, and
      iv. converting at least some of the measured emissions to an oxygen concentration based upon a known conversion algorithm.
11. A method for monitoring changes in oxygen concentration within an enclosed space, comprising the steps of:
   a. obtaining an oxygen-sensitive probe according to any of statements 1 to 9,
   b. placing the probe within the enclosed space,
   c. ascertaining oxygen concentration within the enclosed space over time by:
      i. repeatedly exposing the probe to excitation radiation over time,
      ii. measuring radiation emitted by the excited probe after at least some of the exposures,
      iii. measuring passage of time during the repeated excitation exposures and emission measurements, and
      iv. converting at least some of the measured emissions to an oxygen concentration based upon a known conversion algorithm, and
   d. reporting at least one of (i) at least two ascertained oxygen concentrations and the time interval between those reported concentrations, and (ii) a rate of change in oxygen concentration within the enclosed space calculated from data obtained in step (c).
12. The method of statement 10 or 11, wherein the enclosed space may be a retention chamber of a hermetically sealed package.
13. A method of preparing the photoluminescent oxygen-sensitive probe according to any of statements 4 to 9 when dependent on statement 3, which includes at least the steps of:
   a. preparing a coating cocktail which contains the photoluminescent oxygen-sensitive dye (21) and the oxygen-permeable polymer (22) in an organic solvent,
   b. applying the cocktail to the first major surface (30a) of the support material (30), and
   c. allowing the cocktail to dry, whereby a solid-state thin film coating (20) is formed on the support (30), thereby forming the photoluminescent oxygen-sensitive probe (10).
14. The method of statement 13, wherein the cocktail comprises a solution of platinumoctaethylporphine-ketone and polystyrene in ethylacetate, and/or wherein the concentration of the polymer in organic solvent is in the range of 0.1 to 20% w/w and the dye: polymer ratio is in the range of 1:20 to 1:10,000 w/w.
15. The method of statement 13 or 14, further comprising a step of heat treating the probe, and/or further comprising a step of coating a pressure-sensitive adhesive (40) onto the first major surface (30a) of the support material (30).

### BRIEF DESCRIPTION OF THE DRAWINGS

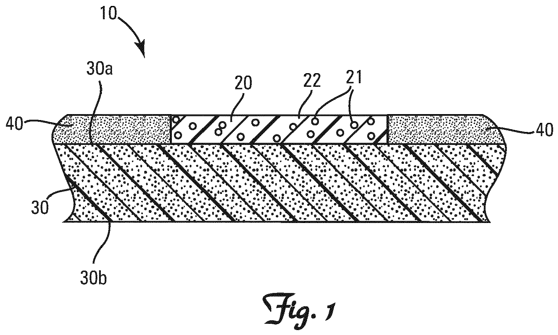

Figure 1 is a grossly enlarge cross-sectional side view of a central portion of one embodiment of the invention.

### DETAILED DESCRIPTION OF A PREFERRED EMBODIMENT

### Definitions

As used herein, including the claims, the phrase ***"oxygen permeable"*** means a material that when formed into a 1 mil film has an oxygen transmission rate of greater than 1,000 c³/m2 day when measured in accordance with ASTM D 3985.

As used herein, including the claims, the term *"**spinlaid**"* means a process for producing fibrous nonwoven fabric directly from extruded polymer fibers and includes spunbond and meltblown techniques.

As used herein, including the claims, the phrase **"*thin film*"** means a film having a thickness of less than 10µm.

As used herein, including the claims, the term *"**wettable**"* means the ability of water to maintain contact with the surface of the solid sufficient to provide good aqueous wicking characteristics.

As used herein, including the claims, the phrase *"**moderately wettable**"* means that water maintains a contact angle θ of less than 90°.

As used herein, including the claims, the phrase *"**highly wettable**"* means that water maintains a contact angle θ of less than 60°.

As used herein, including the claims, the phrase *"**completely wettable**"* means that water maintains a contact angle θ of less than 30°.

### Nomenclature

- **10**: Probe
- **20**: Solid State Composition
- **21**: Oxygen-Sensitive Photoluminescent Dye
- **22**: Oxygen-Permeable Polymer Matrix
- **30**: Support Layer
- **30a**: First or Upper Major Surface of Support Layer
- **30b**: Second or Lower Major Surface of Support Layer
- **40**: Pressure Sensitive Adhesive Layer

### Description

### Construction

Referring generally to Figure 1, a first aspect of the invention is an oxygen-sensitive probe or sensor **10** useful for optically measuring oxygen concentration within an enclosed space (not shown), such as the retention chamber (not shown) of a hermetically sealed package (not shown). The probe **10** includes a thin film of a solid state photoluminescent composition **20** coated onto a first major surface **30a** of a support layer **30.** The solid state photoluminescent composition **20** includes an oxygen-sensitive photoluminescent dye **21** embedded within an oxygen-permeable polymer matrix **22.**

The oxygen-sensitive photoluminescent dye **21** used in the solid state photoluminescent composition **20** may be selected from any of the well-known oxygen sensitive photoluminescent dyes **21.** One of routine skill in the art is capable of selecting a suitable dye **21** based upon the intended use of the probe **10.** A nonexhaustive list of suitable oxygen sensitive photoluminescent dyes **21** includes specifically, but not exclusively, ruthenium(II)-bipyridyl and ruthenium(II)-diphenylphenanothroline complexes, porphyrin-ketones such as platinum(II)-octaethylporphine-ketone, platinum(II)-porphyrin such as platinum(II)-tetrakis(pentafluorophenyl)porphine, palladium(II)-porphyrin such as palladium(II)-tetrakis(pentafluorophenyl)porphine, phosphorescent metallocomplexes of tetrabenzoporphyrins, chlorins, azaporphyrins, and long-decay luminescent complexes of iridium(III) or osmium(II).

Typically, the hydrophobic oxygen-sensitive photoluminescent dye **21** is compounded with a suitable oxygen-permeable and hydrophobic carrier matrix **22.** Again, one of routine skill in the art is capable of selecting a suitable oxygen-permeable hydrophobic carrier matrix **22** based upon the intended use of the probe **10** and the selected dye **21.** A nonexhaustive list of suitable polymers for use as the oxygen-permeable hydrophobic carrier matrix **22** includes specifically, but not exclusively, polystryrene, polycarbonate, polysulfone, polyvinyl chloride and some co-polymers.

Referring again to Figure 1, the probe **10** preferably includes a layer of a pressure sensitive adhesive **40** on the first major surface **30a** of the support layer **30** for facilitating attachment of the probe **10** to a surface (not shown) of a container (not shown) that defines the enclosed space (not shown) whose oxygen concentration is to be measured, with the photoluminescent solid state composition **20** on the probe **10** facing outward from the container (not shown) through an area of the container (not shown) that is transparent or translucent to radiation at the excitation and emission wavelengths of the dye **21** in the photoluminescent solid state composition **20.** The adhesive **40** may but should not cover the photoluminescent solid state composition **20.**

The support layer **30** is a sheet of a microporous wettable polyolefin with first and second major surfaces **30a** and **30b.** Such materials, when employed as the support layer **30** for the photoluminescent solid state composition **20,** substantially reduces cross-sensitivity of the photoluminescent solid state composition **20** to humidity relative to probes **10** employing other traditional materials. The support layer **30** is preferably highly wettable and most preferably completely wettable. Preferred materials for use as the support layer **30** are non-woven spinlaid fibrous polyolefin fabrics, such as a spunbond polypropylene fabric grafted with hydrophilic pendant groups such as acrylic acid. One such fabric is available from Freudenberg Nonwovens NA of Hopkinsville, Kentucky and Freudenberg Nonwovens Ltd of West Yorkshire, United Kingdom under the designation 700/70 (a nonwoven microporous spunbond polypropylene fabric grafted with acrylic acid to render the polymer wettable and etched with a caustic). In addition, this type of support material substantially increases the luminescent intensity signals obtainable from the sensor **10** and improves mechanical properties of the oxygen-sensitive coating (when compared to traditional sensors on planar, non-porous polymeric support such as polyester Mylar® film).

The support layer **30** is preferably between about 30 µm and 500 µm thick.

The probes **10** of the present invention have little cross-sensitivity to humidity, with a change of luminescence lifetime of less than 5% with a change in relative humidity of an analyte gas from 1% to 90%. By proper selection of the support layer **30,** based upon various factors including the particular photoluminescent solid state composition **20** employed, a change in luminescence lifetime of less than 3% and even less than 1% can be readily achieved.

### Manufacture

The probe **10** can be manufactured by the traditional methods employed for manufacturing such probes **10.** Briefly, the probe **10** can be conveniently manufactured by (A) preparing a coating cocktail (not shown) which contains the photoluminescent oxygen-sensitive dye **21** and the oxygen-permeable polymer **22** in an organic solvent (not shown) such as ethylacetate, (B) applying the cocktail to the first major surface **30a** of a support material **30** or soaking the support material in the cocktail (not shown), and (C) allowing the cocktail (not shown) to dry, whereby a solid-state thin film coating **20** is formed on the support 30, thereby forming the photoluminescent oxygen-sensitive probe **10.** The resultant probe **10** is preferably heat treated to remove mechanical stress from the sensor material which is associated with its preparation (solidification and substantial volume reduction).

Generally, the concentration of the polymer **22** in the organic solvent (not shown) should be in the range of 0.1 to 20% w/w, with the ratio of dye **21** to polymer **22** in the range of 1:50 to 1:5,000 w/w.

A layer of pressure sensitive adhesive **40** can optionally be coated onto the first major surface **30a** of the support material **30** by conventional coating techniques.

### Use

The probe **10** can be used to quickly, easily, accurately and reliably measure oxygen concentration within an enclosed space (not shown) regardless of the relative humidity within the enclosed space (not shown). The probe **10** can be used to measure oxygen concentration in the same manner as other oxygen sensitive photoluminescent probes. Briefly, the probe **10** is used to measure oxygen concentration within an enclosed space (not shown) by (A) placing the probe **10** within the enclosed space (not shown) at a location where radiation at the excitation and emission wavelengths of the dye **21** can be transmitted to and received from the photoluminescent solid state composition **20** with minimal interference and without opening or otherwise breaching the integrity of the enclosure, and (B) ascertaining the oxygen concentration within the enclosed space (not shown) by (i) repeatedly exposing the probe **10** to excitation radiation over time, (ii) measuring radiation emitted by the excited probe **10** after at least some of the exposures, (iii) measuring passage of time during the repeated excitation exposures and emission measurements, and (iv) converting at least some of the measured emissions to an oxygen concentration based upon a known conversion algorithm. Such conversion algorithms are well know to and readily developable by those with routine skill in the art.

In a similar fashion, the probe **10** can be used to quickly, easily, accurately and reliably monitor changes in oxygen concentration within an enclosed space (not shown) regardless of the relative humidity within the enclosed space (not shown). The probe **10** can be used to monitor changes in oxygen concentration in the same manner as other oxygen sensitive photoluminescent probes. Briefly, the probe **10** is used to monitor changes in oxygen concentration within an enclosed space (not shown) by (A) placing the probe **10** within the enclosed space (not shown) at a location where radiation at the excitation and emission wavelengths of the dye **21** can be transmitted to and received from the photoluminescent solid state composition **20** with minimal interference and without opening or otherwise breaching the integrity of the enclosure, (B) ascertaining the oxygen concentration within the enclosed space (not shown) over time by (i) repeatedly exposing the probe **10** to excitation radiation over time, (ii) measuring radiation emitted by the excited probe **10** after at least some of the exposures, (iii) measuring passage of time during the repeated excitation exposures and emission measurements, and (iv) converting at least some of the measured emissions to an oxygen concentration based upon a known conversion algorithm, and (C) reporting at least one of (i) at least two ascertained oxygen concentrations and the time interval between those reported concentrations, and (ii) a rate of change in oxygen concentration within the enclosed space calculated from data obtained in step (B). Conversion algorithms used to convert the measured emissions to an oxygen concentration are well know to and readily developable by those with routine skill in the art.

The radiation emitted by the excited probe **10** can be measured in terms of intensity and/or lifetime (rate of decay, phase shift or anisotropy), with measurement of lifetime generally preferred as a more accurate and reliable measurement technique when seeking to establish oxygen concentration via measurement of the extent to which the dye **21** has been quenched by oxygen.

## Claims

1. An oxygen-sensitive probe (10) comprising an oxygen-sensitive photoluminescent dye (21) applied onto a first major surface (30a) of a microporous wettable polyolefin support layer (30) so as to form a thin film of the photoluminescent dye on the support layer.

2. The oxygen-sensitive probe of Claim 1, further comprising a layer of a pressure-sensitive adhesive (40) applied onto the first major surface (30a) of the support layer (30).

3. The oxygen sensitive probe of Claim 1 or 2, wherein the oxygen-sensitive photoluminescent dye (21) is applied as a solid state composition comprising the oxygen-sensitive photoluminescent dye embedded within an oxygen-permeable polymer matrix (22).

4. The oxygen-sensitive probe of any of the preceding claims, wherein the oxygen-sensitive photoluminescent dye (21) is a transition metal complex.

5. The oxygen-sensitive probe of Claim 4, wherein the transition metal complex is selected from the group consisting of a ruthenium bipyridyl, a ruthenium diphenylphenanothroline, a platinum porphyrin, a palladium porphyrin, a phosphorescent metallocomplex of a porphyrinketone, an azaporphyrin, a tetrabenzoporphyrin, a chlorin, and a long-decay luminescent complex of iridium(III) or osmium(II).

6. The oxygen-sensitive probe of Claim 3, wherein the oxygen-permeable polymer matrix (22) is selected from the group consisting of polystryrene, polycarbonate, polysulfone, and polyvinyl chloride.

7. The oxygen-sensitive probe of any of the preceding claims, wherein the wettable polyolefin support layer (30) is highly wettable, and/or wherein the wettable polyolefin support layer (30) is completely wettable, and/or wherein the wettable polyolefin support layer (30) is a non-woven spinlaid fibrous polyolefin fabric, and/or wherein the wettable polyolefin support layer (30) is a non-woven spunbond polyolefin fabric, and/or wherein the wettable polyolefin support layer (30) is a wettable non-woven spunbond polypropylene fabric, and/or wherein the wettable polyolefin support layer (30) is a non-woven spinlaid polypropylene fabric with hydrophilic pendant groups in which the pendant groups are optionally acrylic acid groups and/or wherein the wettable polyolefin is a wettable polyethylene or polypropylene.

8. The oxygen-sensitive probe of any of the preceding claims, wherein the support layer (30) is between 30 µm and 500 µm thick, and/or wherein the solid state composition (20) is applied only to the first major surface (30a) of the support layer.

9. The oxygen-sensitive probe of any of the preceding claims, wherein the probe has a change of luminescence lifetime of less than 5% with a change in relative humidity of an analyte gas from 1% to 90%.

10. A method for measuring oxygen concentration within an enclosed space comprising the steps of:
(A) obtaining an oxygen-sensitive probe according to any one of the preceding claims
(B) placing the probe within the enclosed space, and
(C) ascertaining oxygen concentration within the enclosed space by
(i) repeatedly exposing the probe to excitation radiation over time,
(ii) measuring radiation emitted by the excited probe after at least some of the exposures,
(iii) measuring passage of time during the repeated excitation exposures and emission measurements, and
(iv) converting at least some of the measured emissions to an oxygen concentration based upon a known conversion algorithm.

11. A method for monitoring changes in oxygen concentration within an enclosed space comprising the steps of:
(A) obtaining an oxygen-sensitive probe according to any one of Claims 1 to 9,
(B) placing the probe within the enclosed space,
(C) ascertaining oxygen concentration within the enclosed space over time by:
(i) repeatedly exposing the probe to excitation radiation over time,
(ii) measuring radiation emitted by the excited probe after at least some of the exposures,
(iii) measuring passage of time during the repeated excitation exposures and emission measurements, and
(iv) converting at least some of the measured emissions to an oxygen concentration based upon a known conversion algorithm, and
(D) reporting at least one of (i) at least two ascertained oxygen concentrations and the time interval between those reported concentrations, and (ii) a rate of change in oxygen concentration within the enclosed space calculated from data obtained in step (C).

12. The method of Claim 10 or 11, wherein the enclosed space may be a retention chamber of a hermetically sealed package.

13. A method of preparing a photoluminescent oxygen-sensitive probe according to any one of Claims 4 to 9, when dependent on Claim 3, which includes at least the steps of
(A) preparing a coating cocktail which contains the photoluminescent oxygen-sensitive dye and the oxygen-permeable polymer in an organic solvent,
(B) applying the cocktail to the first major surface of the support material, and
(C) allowing the cocktail to dry, whereby a solid state thin film coating is formed on the support, thereby forming the photoluminescent oxygen sensitive probe.

14. The method of Claim 13, wherein the cocktail comprises a solution of platinumoctaethylporphine-ketone and polystyrene in ethylacetate, and/or wherein the concentration of the polymer in organic solvent is in the range of 0.1 to 20% w/w and the dye:polymer ratio is in the range of 1:20 to 1:10,000 w/w.

15. The method of Claim 13 or 14, further comprising a step of heat treating the probe, and/or further comprising a step of coating a pressure-sensitive adhesive (40) onto the first major surface (30a) of the support material (30).
